# EUROPÄISCHE PATENTSCHRIFT

(11) **EP 4 269 062 B1**
(45) Veröffentlichungstag und Bekanntmachung des Hinweises auf die Patenterteilung: **20.11.2024**
(21) Anmeldenummer: 22170368.9
(22) Anmeldetag: 27.04.2022
(51) Int. Cl.: B29C 45/27

(54) **DÜSENSPITZE FÜR EINE HEISSKANALDÜSE**
NOZZLE JET FOR A HOT CHANNEL NOZZLE
POINTE DE BUSE POUR UNE BUSE À CANAUX CHAUFFANTS

(43) Veröffentlichungstag der Anmeldung: 01.11.2023
(73) Patentinhaber: Wild & Küpfer AG, 8716 Schmerikon (CH)
(72) Erfinder: WERDER, Paul, 5624 Bünzen AG (CH)
(74) Vertreter: Prins Intellectual Property AG

(56) Entgegenhaltungen:
- DE-A1- 102019 123 132
- US-A1- 2010 015 275
- US-B2- 7 364 425
- US-B2- 9 610 722

## Beschreibung

### Technisches Gebiet

Die Erfindung betrifft eine Heisskanaldüse, umfassend einen Düsenkörper mit einem Düsenschmelzekanal, wobei der Düsenkörper am Ende des Düsenschmelzekanals eine Düsenspitze mit mindestens einem Austrittskanal für eine Kunststoffschmelze aufweist.

### Technischer Hintergrund

Heisskanaldüsen sind aus dem Stand der Technik bekannt. Sie dienen dazu, eine Kunststoffschmelze zu einer Kavität eines Spritzgusswerkzeugs zu transportieren und in diese einzuspritzen. Zu diesem Zweck sind Heisskanaldüsen beheizt, um den Düsenschmelzekanal und die Kunststoffschmelze auf einer Temperatur zu halten, bei der die Kunststoffschmelze spritz- und fliessfähig bleibt.

Solche Heisskanaldüsen umfassen typischerweise einen Düsenkörper mit zentrisch angeordnetem Düsenschmelzekanal. Am Ende resp. in Verlängerung des Düsenschmelzekanals ist eine Düsenspitze angeordnet, welche oft mehrere Austrittskanäle aufweist, um die Kunststoffschmelze in die Vorkammer der Heisskanaldüse zu leiten. Von da aus gelangt die Kunststoffschmelze schliesslich in die gekühlte Kavität des Spritzgusswerkzeugs.

Oft werden Kunststofferzeugnisse in verschiedenen Farben hergestellt. Bei einem solchen Farbwechsel wird eine neue Kunststoffschmelze mit der gewünschten Farbe bereitgestellt und die Heisskanaldüse muss vollständig von der alten Kunststoffschmelze befreit werden, welche ansonsten Farbschlieren in den neu gespritzten Kunststofferzeugnissen erzeugt. Bei den herkömmlichen Heisskanaldüsen kann ein solcher Farbwechsel mehrere hundert Zyklen dauern, bis auch die Anspritzkalotte absolut schlierenfrei ist. Diese führt zu einem hohen Ausschuss an fehlerhaften Kunststofferzeugnissen und entsprechenden langen unproduktiven Zeiten für die Spritzgussmaschinen.

Die Druckschrift US 7 364 425 B2 beschreibt eine Düsenspitze umfassend vordere Austrittsöffnungen und hintere Austrittsöffnungen. Die Druckschrift US 9 610 722 B2 zeigt ebenfalls eine Düsenspitze mit Austrittsöffnungen.

DE102006029152 beschreibt eine Düsenspitze zur verbesserten Durchmischung. Dazu weist sie mehrere gewendelte Schmelzekanäle auf. Dabei entsteht eine gleichmässige Verwirbelung stromabwärts. Allfällige Ablagerungen im Bereich zwischen den Austrittsöffnungen werden jedoch ungenügend durchmischt.

EP2125324 beschreibt ein Düsenmundstück resp. eine Düsenspitze zur besseren Durchmischung der Schmelze. Das Düsenmundstück umfasst stabartig ausgebildete Strömungseinbauten, die sich radial und axial durch den Strömungskanal erstrecken. Diese Strömungseinbauten dienen zum Verwirbeln des durch den Strömungskanal strömenden Massestroms, um die Homogenität desselben zu verbessern. Sie bilden dazu eine Vielzahl von sich kreuzenden Strömungskanälen oder -durchgängen, die das Material immer wieder umlenken, durchmischen und schliesslich zur Materialaustrittsöffnung leiten, die mit dem (nicht gezeigten) Formnest in Strömungsverbindung steht. Der Aufbau ist komplex in der Herstellung und entsprechend teuer. Zudem ist auch der Einspritzdruck massiv erhöht.

US2007003661 und CH687068 beschreiben ebenfalls Düsenspitzen, welche zu einer besseren Durchmischung der Kunststoffschmelze und weniger Ablagerungen führen sollen. Eine effiziente Durchmischung der Schmelze scheint jedoch nicht statt zu finden. Auch diese Lösungen sind komplex im Aufbau und entsprechend teuer.

Es besteht daher ein Bedarf nach einer einfach gestalteten Düsenspitze, welche dennoch einen hohen Grad an Durchmischung der Kunststoffschmelze in der Vorkammer erzielt und gleichzeitig ungewünschte Schlierenbildung möglichst verhindert.

### Darstellung der Erfindung

Eine Aufgabe der Erfindung ist es, eine Düsenspitze resp. eine Heisskanaldüse anzugeben, mittels welcher ein Farbwechsel innert kürzester Zeit erfolgen kann und ohne das bekannte "Kalottenkappe ziehen" erfolgen kann. Die Düsenspitze soll einfach in der Herstellung sein, einen hohen Grad an Durchmischung der Kunststoffschmelze in der Vorkammer erzielen und ungewünschte Ablagerungen in der Vorkammer verhindern.

Diese Aufgabe wird durch eine Düsenspitze für eine Heisskanaldüse mit den Merkmalen des Anspruch 1 und einer Heisskanaldüse mit den Merkmalen des Anspruchs 10 gelöst. Die Düsenspitze für die Heisskanaldüse umfasst ein im Einbauzustand stromabwärts gerichtetes, vorderes Ende und ein im Einbauzustand stromaufwärts gerichtetes, hinteres Ende. Die Düsenspitze weist weiter einen zentralen Schmelzekanal mit einer Eintrittsöffnung am hinteren Ende der Düsenspitze auf. Die Düsenspitze weist weiter mehrere Schmelzeaustrittskanäle auf, welche mit dem zentralen Schmelzekanal verbunden sind und in regelmässigen Abständen um eine Mittellängsachse der Düsenspitze angeordnet sind. Die Düsenspitze weist weiter mehrere vordere Austrittsöffnungen und mehrere hintere Austrittsöffnungen auf, in welchen jeweils ein vorderer respektive hinterer Schmelzeaustrittskanal mündet, wobei die vorderen Schmelzeaustrittskanäle nach hinten gerichtet sind. Dabei können die hinteren Schmelzeaustrittskanäle nach vorne gerichtet sein.

Die Kunststoffschmelze wird in der Düsenspitze in mehrere Schmelzeströme aufgeteilt, wovon ungefähr die Hälfte der Kunststoffschmelze durch die nach hinten gerichteten vorderen Schmelzeaustrittskanäle aus deren vorderen Austrittsöffnungen austritt und in Richtung der aus den hinteren Schmelzeaustrittskanäle austretenden restlichen Schmelze fliesst. Dabei fliessen die vorderen und hinteren Schmelzeströme innerhalb der umlaufenden Vorkammer zwischen Düsenspitze und Düsenmundstück wieder zusammen und werden effizient gemischt. Es entsteht eine Verwirbelung, welche die gesamte Vorkammer spülen kann. Entsprechend entstehen keine Ablagerungen in Bereichen, die bei einem Farbwechsel nur sehr langsam ausgespült werden. Es hat sich gezeigt, dass mit einer solchen Düsenspitze ein Farbwechsel innerhalb 3 bis 10 Zyklen abgeschlossen ist. Durch die effiziente Durchmischung ist auch die sogenannte Hofbildung praktisch eliminiert. Zudem ist die Düsenspitze aufgrund der einfachen Ausgestaltung günstig in der Herstellung.

Bevorzugte Ausführungsarten der Erfindung sind in den abhängigen Ansprüchen angegeben.

Die Düsenspitze kann einen länglichen Grundkörper mit zylinderförmigen Abschnitten aufweisen. Am vorderen Ende kann sie spitz zulaufend sein und am hinteren Ende weist sie eine Eintrittsöffnung für die Kunststoffschmelze in den zentralen Schmelzekanal auf. Falls die Heisskanaldüse einen Nadelverschluss umfasst, weist die Düsenspitze eine Durchgangsbohrung zur genauen Positionierung und Führung der Düsennadel auf. Die vorderen und hinteren Austrittsöffnungen können in der vorderen Hälfte, bevorzugt im vorderen Drittel der Düsenspitze angeordnet sein. Die Schmelzeaustrittskanäle sind radial nach aussen gerichtet und geneigt gegenüber einer Senkrechten auf die Mittellängsachse der Düsenspitze. Im hinteren Bereich kann die Düsenspitze eine hintere Schulter aufweisen, mittels welcher sie durch ein Düsenmundstück in einem Düsenkörper der Heisskanaldüse gehalten werden kann.

In einigen Ausführungsformen können die hinteren Schmelzeaustrittskanäle der mehreren hinteren Austrittsöffnungen nach vorne gerichtet sein. Auf diese Weise wird die Verwirbelung durch die aufeinander gerichteten vorderen und hinteren Schmelzeströme weiter erhöht.

In einigen Ausführungsformen können die vorderen und hinteren Austrittsöffnungen alternierend in regelmässigen Abständen um die Mittellängsachse der Düsenspitze angeordnet sein.

In einigen Ausführungsformen kann die Düsenspitze 3 bis 12, vorzugsweise 6, vordere Austrittsöffnungen und 3 bis 12, vorzugsweise 6, hintere Austrittsöffnungen aufweisen.

In einigen Ausführungsformen kann die Düsenspitze eine umlaufende Schulter aufweisen, welche im eingebauten Zustand der Düsenspitze eine hintere Abgrenzung einer Vorkammer in der Heisskanaldüse ausbildet. Die hinteren Austrittsöffnungen können dabei in der Schulter angeordnet sein. Die nach hinten gerichteten Schmelzeströme treffen dabei auf die Schulter auf und vermischen sich effizient mit den Schmelzeströmen der hinteren Austrittsöffnungen.

In einigen Ausführungsformen können die vorderen Schmelzeaustrittskanäle der mehreren vorderen Austrittsöffnungen vom vorderen Ende des zentralen Schmelzekanals abzweigen.

In einigen Ausführungsformen können die vorderen Schmelzeaustrittskanäle der mehreren vorderen Austrittsöffnungen gegenüber der Mittellängsachse der Düsenspitze um 30° bis 60°, vorzugsweise um ca. 45° geneigt sein.

In einigen Ausführungsformen können die hinteren Schmelzeaustrittskanäle der mehreren hinteren Austrittsöffnungen gegenüber der Mittellängsachse der Düsenspitze um 30° bis 60°, vorzugsweise um ca. 45° geneigt sein.

In einigen Ausführungsformen kann die Länge der vorderen und hinteren Schmelzeaustrittskanäle etwa 1,0- bis 2,0-mal dem Durchmesser der vorderen und hinteren Schmelzeaustrittskanäle entsprechen. Der Querschnitt der vorderen und hinteren Schmelzeaustrittskanäle kann kreisrund sein.

In einigen Ausführungsformen ist der Querschnitt der vorderen Schmelzeaustrittskanäle grösser als der Querschnitt der hinteren Schmelzeaustrittskanäle. Auf diese Weise kann die Menge der Kunststoffschmelze, die durch die vorderen resp. hinteren Schmelzeaustrittskanäle fliesst, eingestellt werden, so dass diese etwa hälftig aufgeteilt ist.

In einigen Ausführungsformen können die vorderen Schmelzeaustrittskanäle direkt an einer vorderen Stirnfläche des zentralen Schmelzekanals ansetzen.

In einigen Ausführungsformen kann der zentrale Schmelzekanal an einem vorderen Ende spitz zulaufend oder flach ausgebildet sein. Der zentrale Schmelzekanal kann alternativ an dem vorderen Ende mittig einen nach hinten gerichteten domförmigen Vorsprung aufweisen. Bei einer Düsenspitze mit spitz zulaufendem zentralen Schmelzekanal kann es vorkommen, dass sich Kunststoffschmelze am vorderen Ende des zentralen Schmelzekanals ablagert und sich irgendwann im Verlauf des Kunststoffspritzens löst und zu einer ungewollten Schlierenbildung führt. Indem das vordere Ende des zentralen Schmelzekanals flach ausgebildet ist, d.h. die vordere Wand des zentralen Schmelzekanals ist eben und steht senkrecht zur Mittellängsachse der Düsenspitze, und die vorderen Schmelzeaustrittskanäle direkt an der Endfläche des zentralen Schmelzekanals ansetzen, können solche Ablagerungen verhindert werden. Der gleiche Effekt entsteht bei einem zentralen Schmelzekanal mit domförmigen Vorsprung oder bei einer Heisskanaldüse mit Verschlussnadel, indem der Bereich für allfällige Ablagerungen durch den Vorsprung oder die Verschlussnadel besetzt ist.

In einigen Ausführungsformen kann die Düsenspitze eine durchgehende Bohrung für eine Verschlussnadel aufweisen.

Die Erfindung betrifft weiter eine Heisskanaldüse umfassend einen Düsenkörper mit einem Düsenschmelzekanal, einer Düsenspitze wie voran beschrieben, einem Düsenmundstück und einem Heizelement, wobei zwischen dem Düsenmundstück und der Düsenspitze eine Vorkammer ausgebildet ist.

Die Heisskanaldüse kann eine offene Heisskanaldüse oder eine Heisskanaldüse mit Nadelverschluss sein.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung einer offenen Heisskanaldüse mit einer Düsenspitze unter (a) mit Schnitt durch einen hinteren Schmelzeaustrittskanal und unter (b) mit Schnitt durch einen vorderen Schmelzeaustrittskanal;
- Fig. 2: eine perspektivische Ansicht der Düsenspitze aus Fig. 1;
- Fig. 3: eine Schnittdarstellung einer Heisskanaldüse mit einer Düsenspitze und Nadelverschluss unter (a) mit Schnitt durch einen hinteren Schmelzeaustrittskanal und unter (b) mit Schnitt durch einen vorderen Schmelzeaustrittskanal;
- Fig. 4: eine perspektivische Ansicht der Düsenspitze auf Fig. 3;
- Fig. 5: eine Schnittdarstellung einer offenen Heisskanaldüse mit einer Düsenspitze mit abgeflachtem Schmelzekanalende.

### Wege zur Ausführung der Erfindung

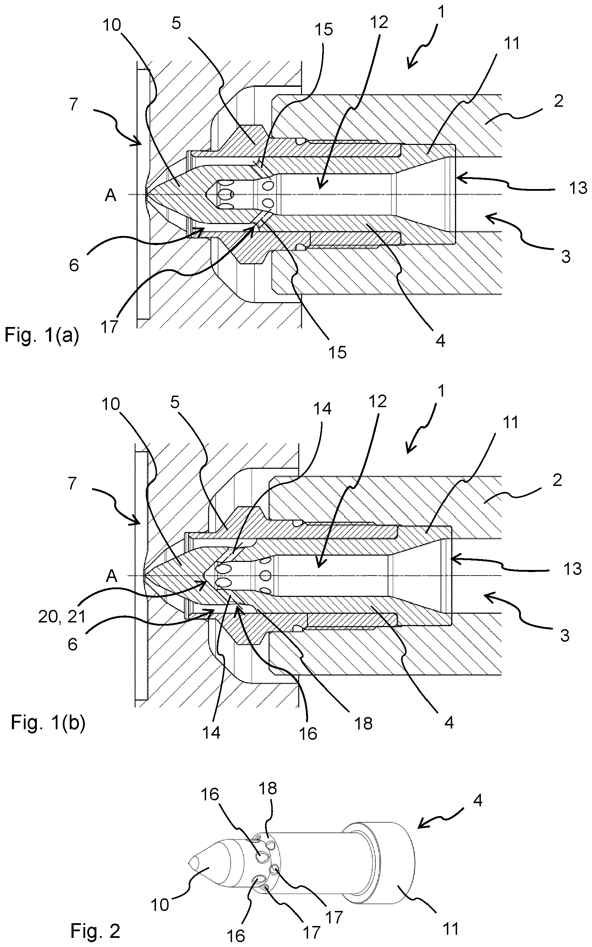

Fig. 1 zeigt eine Schnittdarstellung einer offenen Heisskanaldüse mit einer Düsenspitze unter (a) mit Schnitt durch einen hinteren Schmelzeaustrittskanal und unter (b) mit Schnitt durch einen vorderen Schmelzeaustrittskanal. Die Heisskanaldüse 1 umfasst einen Düsenkörper 2 mit zentrisch angeordnetem Düsenschmelzekanal 3. Am stromabwärts gerichteten Ende resp. in Verlängerung des Düsenschmelzekanals 3 ist eine Düsenspitze 4 angeordnet, welche mit einem Düsenmundstück 5 gehalten ist. Zwischen dem Düsenmundstück 5 und der Düsenspitze 4 ist ein Teil einer Vorkammer 6 ausgebildet, durch welche die Kunststoffschmelze fliesst bevor sie in eine Kavität 7 eines Spritzgusswerkzeugs gelangt.

Die dargestellte Düsenspitze 4 weist einen länglichen Grundkörper mit zylindrischen Abschnitten auf. Eine hintere Schulter im Bereich des hinteren Endes 11 dient der Befestigung der Düsenspitze 4 im Düsenkörper 2 mittels des Düsenmundstücks 5. Am vorderen Ende 10 ist sie spitz zulaufend ausgebildet.

Die Düsenspitze 4 weist einen zentralen Schmelzekanal 12 mit einer hinteren Eintrittsöffnung 13 auf, welche an den Düsenschmelzekanal 3 des Düsenkörpers 2 anschliesst. Im vorderen Bereich 10 der Düsenspitze 4, d.h. am vorderen Ende des zentralen Schmelzekanals 12 verzweigt sich dieser in regelmässig angeordnete vordere und hintere Austrittskanäle 14, 15. Die vorderen Austrittskanäle 14 setzen direkt an einer vorderen Stirnfläche 21 des zentralen Schmelzekanals 12 an, sind in Flussrichtung nach hinten gerichtet und enden in vorderen Austrittsöffnungen 16. Die hinteren Austrittskanäle 15 sind in Flussrichtung nach vorne gerichtet und ende in hinteren Austrittsöffnungen 17. Auf diese Weise ist ein vorderer Kranz und ein hinterer Kranz mit Austrittsöffnungen ausgebildet, die dazu führen, dass die austretenden Schmelzeströme gegeneinander gerichtet sind und sich dadurch sehr effizient mischen. Die gesamte Vorkammer 6 wird dabei dauernd effizient gespült, so dass bei einem Farbwechsel die alte Kunststoffschmelze nach wenigen Zyklen entfernt und durch neue Kunststoffschmelze ersetzt ist.

In der gezeigten Ausführungsform sind die vorderen und hinteren Schmelzeaustrittskanäle 14, 15 um jeweils 45° zur Mittellängsachse A der Düsenspitze geneigt. Zudem sind die Austrittsöffnungen 16, 17 in regelmässigen Abständen alternierend angeordnet.

Die Düsenspitze 4 weist weiter eine vordere umlaufende Schulter 18 auf, welche die Vorkammer nach hinten abgrenzt. Die hinteren Austrittsöffnungen 17 sind in der umlaufenden Schulter 18 angeordnet. Die vorderen Schmelzeaustrittskanäle 14 mit den Austrittsöffnungen 16 sind derart gerichtet resp. angeordnet, dass die austretende Schmelze auf die umlaufende Schulter 18 zwischen den hinteren Austrittsöffnungen 17 auftrifft. Dies führt zu einer sehr effizienten Verwirbelung der Schmelzeströme.

Fig. 2 zeigt eine perspektivische Ansicht der Düsenspitze auf Fig. 1 für eine offene Heisskanaldüse ohne Nadelverschluss. In der Figur sind die alternierenden vorderen und hinteren Austrittsöffnungen 16, 17 und die umlaufende Schulter 18 gut erkennbar.

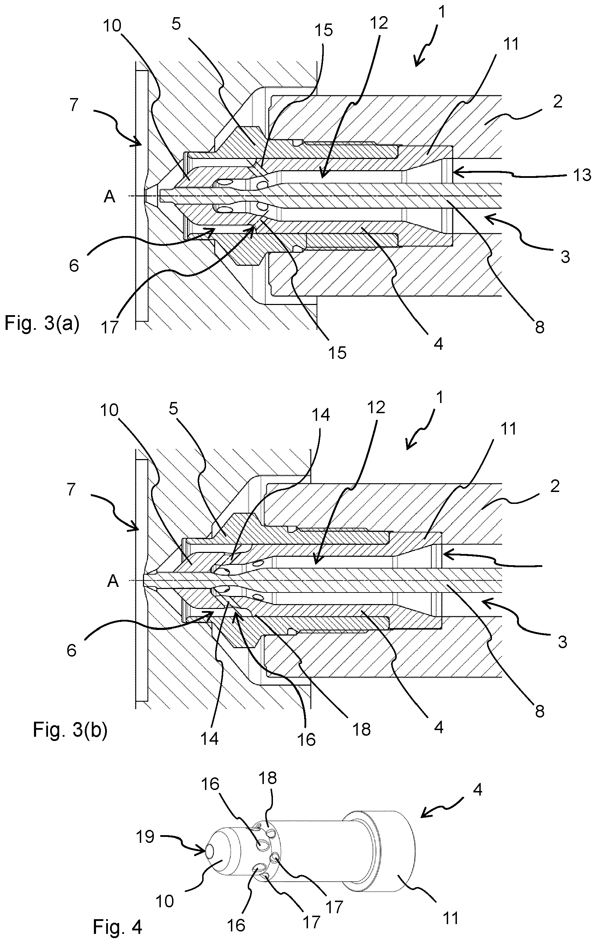

Fig. 3 zeigt eine Schnittdarstellung einer Heisskanaldüse mit einer Düsenspitze und Nadelverschluss. Im Unterschied zur offenen Heisskanaldüse aus Fig. 1 weist die Heisskanaldüse aus Fig. 3 eine Verschlussnadel 8 auf, welche in einer Durchgangsbohrung 19 (sog. Nadelvorzentrierung) der Düsenspitze 4 geführt ist.

Fig. 4 zeigt eine perspektivische Ansicht der Düsenspitze aus Fig. 3. Diese weist im Unterschied zur Düsenspitze aus Fig. 2 zusätzlich eine Durchgangsbohrung 19 für die Verschlussnadel 8 auf.

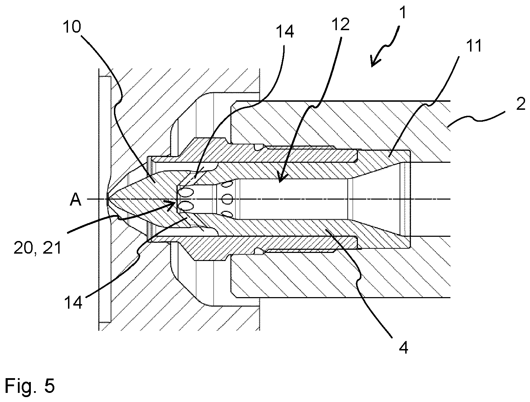

Bei der Düsenspitze 4 aus Fig. 1 ist der zentrale Schmelzekanal 12 am vorderen Ende spitz zulaufend. Fig. 5 zeigt eine Schnittdarstellung einer offenen Heisskanaldüse mit einer Düsenspitze 4 mit Schnitt durch einen vorderen Schmelzeaustrittskanal 14. Im Unterschied zur Düsenspitze 4 aus Fig. 1 ist bei der Düsenspitze aus Fig. 5 das vordere Ende 20 des zentralen Schmelzekanals 12 flach ausgebildet, d.h. die vordere Wand des zentralen Schmelzekanals 12 ist eben und steht senkrecht zur Mittellängsachse A der Düsenspitze 4. Dies ist besonders vorteilhaft, weil bei einem spitz zulaufenden zentralen Schmelzekanal 12 sich Kunststoffschmelze am vorderen Ende des zentralen Schmelzekanals 12 ablagern kann, und sich irgendwann im Verlauf des Kunststoffspritzens lösen und zu einer ungewollten Schlierenbildung führen kann. Indem das vordere Ende 12 des zentralen Schmelzekanals 12 flach ausgebildet ist und die vorderen Schmelzeaustrittskanal 14 direkt an der vorderen Stirnfläche 21 des zentralen Schmelzekanals 12 ansetzen, werden solche Ablagerungen verhindert. Der gleiche Effekt entsteht bei einer Heisskanaldüse mit Verschlussnadel 8, indem der Bereich für allfällige Ablagerungen durch die Verschlussnadel 8 besetzt ist. Alternativ kann das vordere Ende 20 des zentralen Schmelzekanals mittig einen nach hinten gerichteten domförmigen Vorsprung aufweisen.

### Bezeichnungsliste

- 1: Heisskanaldüse
- 2: Düsenkörper
- 3: Düsenschmelzekanal
- 4: Düsenspitze
- 5: Düsenmundstück
- 6: Vorkammer
- 7: Kavität
- 8: Verschlussnadel
- 10: vorderes Ende
- 11: hinteres Ende
- 12: zentraler Schmelzekanal
- 13: Eintrittsöffnung
- 14: vorderer Schmelzeaustrittskanal
- 15: hinterer Schmelzeaustrittskanal
- 16: vordere Austrittsöffnung
- 17: hintere Austrittsöffnung
- 18: umlaufende Schulter
- 19: Durchgangsbohrung (sog. Nadelvorzentrierung)
- 20: vorderes Ende des zentralen Schmelzekanals
- 21: vordere Stirnfläche des zentralen Schmelzekanals
- A: Mittellängsachse

## Patentansprüche

1. Düsenspitze (4) für eine Heisskanaldüse (1) umfassend ein im Einbauzustand stromabwärts gerichtetes, vorderes Ende (10) und ein im Einbauzustand stromaufwärts gerichtetes, hinteres Ende (11); wobei die Düsenspitze (4) einen zentralen Schmelzekanal (12) aufweist, mit einer Eintrittsöffnung (13) am hinteren Ende (11) der Düsenspitze (4); wobei die Düsenspitze (4) mehrere Schmelzeaustrittskanäle (14, 15) aufweist, welche mit dem zentralen Schmelzekanal (12) verbunden sind und in regelmässigen Abständen um eine Mittellängsachse (A) der Düsenspitze (4) angeordnet sind; wobei die Düsenspitze (4) mehrere vordere Austrittsöffnungen (16) und mehrere hintere Austrittsöffnungen (17) aufweist, in welchen jeweils ein vorderer respektive hinterer Schmelzeaustrittskanal (14, 15) mündet, **dadurch gekennzeichnet, dass** die vorderen Schmelzeaustrittskanäle (14) nach hinten gerichtet sind.

2. Düsenspitze nach Anspruch 1, **dadurch gekennzeichnet, dass** die hinteren Schmelzeaustrittskanäle (15) nach vorne gerichtet sind.

3. Düsenspitze nach einem der vorangehenden Ansprüche, **dadurch gekennzeichnet, dass** die vorderen und hinteren Austrittsöffnungen (16, 17) alternierend in regelmässigen Abständen um die Mittellängsachse (A) der Düsenspitze (4) angeordnet sind.

4. Düsenspitze nach einem der vorangehenden Ansprüche, **dadurch gekennzeichnet, dass** die Düsenspitze (4) 3 bis 12, vorzugsweise 6, vordere Austrittsöffnungen (16) und 3 bis 12, vorzugsweise 6, hintere Austrittsöffnungen (17) aufweist.

5. Düsenspitze nach einem der vorangehenden Ansprüche, **dadurch gekennzeichnet, dass** die Düsenspitze (4) eine umlaufende Schulter (18) aufweist, welche im eingebauten Zustand der Düsenspitze (4) eine hintere Abgrenzung einer Vorkammer (6) in der Heisskanaldüse (1) ausbildet, und die hinteren Austrittsöffnungen (17) in der Schulter (18) angeordnet sind.

6. Düsenspitze nach einem der vorangehenden Ansprüche, **dadurch gekennzeichnet, dass** die vorderen Schmelzeaustrittskanäle (14) der mehreren vorderen Austrittsöffnungen (16) vom vorderen Ende des zentralen Schmelzekanals (12) abzweigen.

7. Düsenspitze nach einem der vorangehenden Ansprüche, **dadurch gekennzeichnet, dass** die vorderen Schmelzeaustrittskanäle (14) der mehreren vorderen Austrittsöffnungen (16) gegenüber der Mittellängsachse (A) der Düsenspitze (4) um 30° bis 60°, vorzugsweise um ca. 45° geneigt sind.

8. Düsenspitze nach einem der vorangehenden Ansprüche, **dadurch gekennzeichnet, dass** die hinteren Schmelzeaustrittskanäle (15) der mehreren hinteren Austrittsöffnungen (17) gegenüber der Mittellängsachse (A) der Düsenspitze (4) um 30° bis 60°, vorzugsweise um ca. 45° geneigt sind.

9. Düsenspitze nach einem der vorangehenden Ansprüche, **dadurch gekennzeichnet, dass** der Querschnitt der vorderen Schmelzeaustrittskanäle (14) grösser als der Querschnitt der hinteren Schmelzeaustrittskanäle (15) ist.

10. Düsenspitze nach einem der vorangehenden Ansprüche, **dadurch gekennzeichnet, dass** die vorderen Schmelzeaustrittskanäle (14) direkt an einer vorderen Stirnfläche (21) des zentralen Schmelzekanals (12) ansetzen.

11. Düsenspitze nach einem der vorangehenden Ansprüche, **dadurch gekennzeichnet, dass** der zentrale Schmelzekanal (12) an einem vorderen Ende (20) spitz zulaufend oder flach ausgebildet ist.

12. Düsenspitze nach einem der Ansprüche 1 bis 10, **dadurch gekennzeichnet, dass** der zentrale Schmelzekanal (12) am vorderen Ende (20) einen nach hinten gerichteten domartigen Vorsprung aufweist.

13. Düsenspitze nach einem der vorangehenden Ansprüche, **dadurch gekennzeichnet, dass** die Düsenspitze (4) eine durchgehende Bohrung (19) für eine Verschlussnadel (8) aufweist.

14. Heisskanaldüse mit oder ohne Nadelverschluss umfassend einen Düsenkörper mit einem Düsenschmelzekanal (3), einer Düsenspitze (4) nach einem der vorangehenden Ansprüche, einem Düsenmundstück (5) und einem Heizelement, wobei zwischen dem Düsenmundstück (5) und der Düsenspitze (4) eine Vorkammer (6) ausgebildet ist.

## Claims

1. Nozzle tip (4) for a hot runner nozzle (1) comprising a front end (10) directed downstream in the installed state and a rear end (11) directed upstream in the installed state; wherein the nozzle tip (4) has a central melt channel (12) with an inlet opening (13) at the rear end (11) of the nozzle tip (4); wherein the nozzle tip (4) has a plurality of melt outlet channels (14, 15) which are connected to the central melt channel (12) and are arranged at regular intervals about a central longitudinal axis (A) of the nozzle tip (4); wherein the nozzle tip (4) has a plurality of front outlet openings (16) and a plurality of rear outlet openings (17) into which respectively a front melt outlet channel (14), respectively a rear melt outlet channel (15) opens, **characterized in that** the front melt outlet channels (14) are directed rearwards.

2. Nozzle tip according to claim 1, **characterized in that** the rear melt outlet channels (15) are directed forwards.

3. Nozzle tip according to one of the preceding claims, **characterized in that** the front and the rear outlet openings (16, 17) are arranged alternating at regular intervals about the central longitudinal axis (A) of the nozzle tip (4).

4. Nozzle tip according to one of the preceding claims, **characterized in that** the nozzle tip (4) has 3 to 12, preferably 6 front outlet openings (16) and 3 to 12, preferably 6 rear outlet openings (17).

5. Nozzle tip according to one of the preceding claims, **characterized in that** the nozzle tip (4) has a circumferential shoulder (18), which forms a rear delimitation of a gate bush (6) in the hot runner nozzle (1) in the installed state of the nozzle tip (4), and the rear outlet openings (17) are arranged in the shoulder (18).

6. Nozzle tip according to one of the preceding claims, **characterized in that** the front melt outlet channels (14) of the plurality of front outlet openings (16) branch off from the front end of the central melt channel (12).

7. Nozzle tip according to one of the preceding claims, **characterized in that** the front melt outlet channels (14) of the plurality of front outlet openings (16) are inclined by 30° to 60°, preferably by approximately 45° with respect to the central longitudinal axis (A) of the nozzle tip (4).

8. Nozzle tip according to one of the preceding claims, **characterized in that** the rear melt outlet channels (15) of the plurality of rear outlet openings (17) are inclined by 30° to 60°, preferably by approximately 45° with respect to the central longitudinal axis (A) of the nozzle tip (4).

9. Nozzle tip according to one of the preceding claims, **characterized in that** the cross section of the front melt outlet channels (14) is larger than the cross section of the rear melt outlet channels (15).

10. Nozzle tip according to one of the preceding claims, **characterized in that** the front melt outlet channels (14) start directly at a front end face (21) of the central melt channel (12).

11. Nozzle tip according to one of the preceding claims, **characterized in that** the central melt channel (12) is designed as tapering or flat at a front end (20).

12. Nozzle tip according to one of claims 1 to 10, **characterized in that** the central melt channel (12) has a dome-like projection directed backwards at the front end (20).

13. Nozzle tip according to one of the preceding claims, **characterized in that** the nozzle tip (4) has a through hole (19) for a valve pin (8).

14. Hot runner nozzle with or without a valve pin comprising a nozzle body with a nozzle melt channel (3), a nozzle tip (4) according to one of the preceding claims, a nozzle mouth piece (5) and a heating element, wherein a gate bush (6) is designed between the nozzle mouth piece (5) and the nozzle tip (4).

## Revendications

1. Bec de buse (4) pour une buse à canaux chauds (1), comprenant une extrémité (10) antérieure orientée en aval en position montée et une extrémité (11) postérieure, orientée en amont en position de montage ; le bec de buse (4) comportant un canal central (12) pour masse en fusion, pourvu d'un orifice d'entrée (13) sur l'extrémité (11) postérieure du bec de buse (4) ; le bec de buse (4) comportant plusieurs canaux de sortie (14, 15) de masse en fusion, lesquels sont reliés avec le canal central (12) pour masse en fusion et sont placés à intervalles réguliers autour d'un axe longitudinal médian (A) du bec de buse (4) ; le bec de buse (4) comportant plusieurs orifices de sortie (16) antérieurs et plusieurs orifices de sortie (17) postérieurs, dans lesquels débouche chaque fois un canal de sortie (14, 15) de masse en fusion antérieur, respectivement postérieur, **caractérisé en ce que** les canaux de sortie (14) de masse en fusion antérieurs sont orientés vers l'arrière.

2. Bec de buse selon la revendication 1, **caractérisé en ce que** les canaux de sortie (15) de masse en fusion postérieurs sont orientés vers l'avant.

3. Bec de buse selon l'une quelconque des revendications précédentes, **caractérisé en ce que** les orifices de sortie (16, 17) antérieurs et postérieurs sont placés en alternance à intervalles réguliers autour de l'axe longitudinal médian (A) du bec de buse (4).

4. Bec de buse selon l'une quelconque des revendications précédentes, **caractérisé en ce que** le bec de buse (4) comporte de 3 à 12, de préférence 6 orifices de sortie (16) antérieurs et de 3 à 12, de préférence 6 orifices de sortie (17) postérieurs.

5. Bec de buse selon l'une quelconque des revendications précédentes, **caractérisé en ce que** le bec de buse (4) comporte un épaulement (18) périphérique, lequel en position de montage du bec de buse (4) constitue une délimitation postérieure d'une préchambre (6) dans la buse à canaux chauds (1) et les orifices de sortie (17) postérieurs sont placés dans l'épaulement (18).

6. Bec de buse selon l'une quelconque des revendications précédentes, **caractérisé en ce que** les canaux de sortie (14) de masse en fusion antérieurs dérivent des plusieurs orifices de sortie (16) antérieurs de l'extrémité antérieure du canal central (12) de masse en fusion.

7. Bec de buse selon l'une quelconque des revendications précédentes, **caractérisé en ce que** les canaux de sortie (14) de masse en fusion antérieurs des plusieurs orifices de sortie (16) antérieurs sont inclinés à l'encontre de l'axe longitudinal médian (A) du bec de buse (4) de la valeur de 30° à 60°, de préférence de la valeur d'environ 45°.

8. Bec de buse selon l'une quelconque des revendications précédentes, **caractérisé en ce que** les canaux de sortie (15) de masse en fusion postérieurs des plusieurs orifices de sortie (17) postérieurs sont inclinés à l'encontre de l'axe longitudinal médian (A) du bec de buse (4) de la valeur de 30° à 60°, de préférence de la valeur d'environ 45°.

9. Bec de buse selon l'une quelconque des revendications précédentes, **caractérisé en ce que** la section transversale des canaux de sortie (14) de masse en fusion antérieurs est supérieure à la section transversale des canaux de sortie (15) de masse en fusion postérieurs.

10. Bec de buse selon l'une quelconque des revendications précédentes, **caractérisé en ce que** les canaux de sortie (14) de masse en fusion antérieurs se raccordent directement sur une face latérale (21) antérieure du canal central (12) pour masse en fusion.

11. Bec de buse selon l'une quelconque des revendications précédentes, **caractérisé en ce que** le canal central (12) pour masse en fusion est conçu en pointe ou à plat sur une extrémité (20) antérieure.

12. Bec de buse selon l'une quelconque des revendications 1 à 10, **caractérisé en ce que** le canal central (12) pour masse en fusion comporte sur l'extrémité (20) antérieure une saillie en forme de dôme orientée vers l'arrière.

13. Bec de buse selon l'une quelconque des revendications précédentes, **caractérisé en ce que** le bec de buse (4) comporte un perçage (19) traversant pour une aiguille d'obturation (8).

14. Buse à canaux chauds, pourvue ou non d'une obturation par aiguille, comprenant un corps de buse doté d'un canal de buse (3) pour masse en fusion, d'un bec de buse (4) selon l'une quelconque des revendications précédentes, d'un nez de buse (5) et d'un élément chauffant, entre le nez de buse (5) et le bec de buse (4) étant conçue une préchambre (6).
